# EUROPEAN PATENT APPLICATION

(11) **EP 1 998 201 A1**
(43) Date of publication of application: **03.12.2008**
(21) Application number: 08008844.6
(22) Date of filing: 13.05.2008
(51) Int. Cl.: G02B 7/02, G02B 7/10, G02B 13/00

(54) **Lens barrel and imaging device**

(30) Priority: 17.05.2007 JP 2007132190
(71) Applicant: Sharp Kabushiki Kaisha, Osaka-shi, Osaka 545-8522 (JP)
(72) Inventor: Kasuga, Kyoji, Kyoto 619-1127 (JP); Nagatome, Seiichi, Yamatokoriyama-shi, Nara 639-1134 (JP)
(74) Representative: Müller - Hoffmann & Partner

(57) **Abstract**

An actuator of the present invention includes a holder 8 for holding a lens 13; an upper guide 3 and a base 9 for supporting the holder 8 so that the holder 8 can move in the optical axis direction of the lens 13; and spherical bodies 2, disposed in spaces between the holder 8 and the upper guide 3 and between the holder 8 and the base 9, which are able to rotate in the spaces, respectively, the upper guide 3 and the base 9 supporting the holder 8 via the spherical bodies 2. This makes it possible to provide a compact and slim actuator excellent in impact resistance.

## Description

### FIELD OF THE INVENTION

The present invention relates to an actuator, a method for driving the same, an imaging device, and a mobile electronic apparatus including the imaging device.

### BACKGROUND OF THE INVENTION

In recent years, for the purpose of improving the resolution of a camera (imaging device) built in a mobile electronic apparatus, the number of pixels of an image pickup element to be mounted on such a camera has been increased.

Such an imaging device built in a mobile electronic apparatus often has an autofocusing function necessary for improving the quality of a captured image. Normally, automatic focus is performed by causing an optical system provided in the imaging device to move in an optical axis direction. An exemplary method for, in order for a holder holding the optical system to be able to move in the optical axis direction, supporting the holder is a method for supporting the holder by fixing, to the holder, a pair of leaf springs disposed in parallel with each other.

Further needed to move the holder supported according to such a method as mentioned above is an actuator. As an actuator for driving the holder holding the optical system, a voice-coil actuator is widely used. The voice-coil actuator causes electromagnetic induction with use of a magnetic circuit constituted by a coil and a magnet, thereby driving the coil or the magnet. In the voice-coil actuator, when a current is applied to the coil, thrust that drives the coil or the magnet is generated by electromagnetic induction.

That is, in a voice-coil actuator in which a holder is supported with use of a pair of leaf springs disposed in parallel with each other, thrust that drives a coil or a magnet deforms the pair of leaf springs, thereby shifting the holder in the optical axis direction. For example, Patent Document 1 discloses an autofocusing actuator in which a holder equipped with a lens is supported so as to be able to be shifted in an optical axis direction. In the autofocusing actuator of Patent Document 1, the holder is supported with use of a pair of leaf springs so as to be able to be shifted in the optical axis direction.
[Patent Document 1]
   Japanese Unexamined Patent Application Publication No. 2006-50693 (*Tokukai* 2006-50693; published on February 16, 2006)

However, because the holder is supported by the pair of leaf springs disposed in parallel with each other, the following problems arise when the autofocusing actuator of Patent Document 1 is made more compact (reduced in projection area) and slimmer (reduced in height in the optical axis direction).

As mentioned above, in the autofocusing actuator of Patent Document 1, the holder holding an optical system is supported by the pair of the leaf springs disposed in parallel with each other. Therefore, when the actuator is made more compact and slimmer while securing a normal operation, the strength of the leaf springs supporting the holder is reduced. The following explains why the strength of the leaf springs supporting the holder is reduced by miniaturizing and slimming the actuator.

Explained first with reference to FIG. 13 is an arrangement of the autofocusing actuator of Patent Document 1. It should be noted that the autofocusing actuator of Patent Document 1 employs a voice-coil system. FIG. 13 is a cross-sectional view of an arrangement of a main part of the autofocusing actuator of Patent Document 1. The actuator of FIG. 13 is used for automatic focus in an imaging device built in an ordinary mobile electronic apparatus.

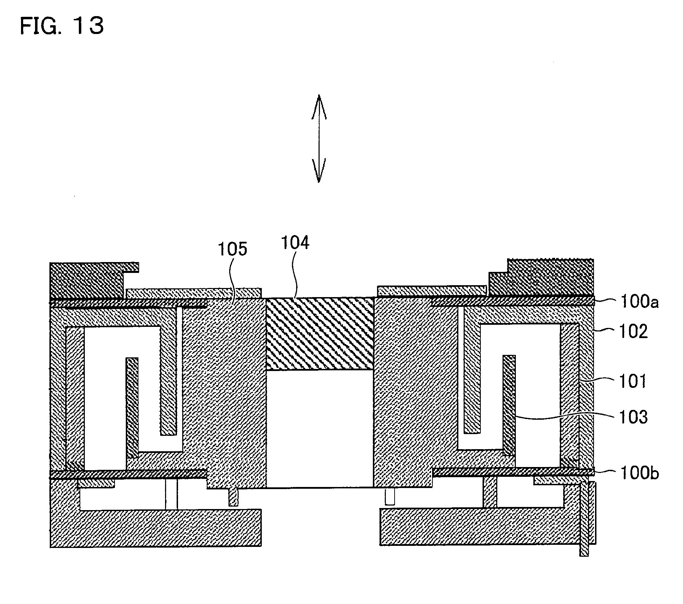

As illustrated in FIG. 13, the conventional actuator includes a pair of leaf springs 100a and 100b, a permanent magnet 101 (magnet) taking the shape of a cylinder, a yoke 102 taking the shape of two cylinder combined, a coil 103, and a cylindrical holder 105 for supporting a lens assembly 104 (optical system). The permanent magnet 101 is provided on the inner side of the outer cylinder of the yoke 102.

The coil 103 is formed on a flange of the holder 105 and sandwiched between the two cylinders of the yoke 102. The pair of leaf springs 100a and 100b are provided on both sides of the holder 105 in an optical axis direction. The holder 105 is supported by the leaf springs 100a and 100b so as to be fixed in a radial direction. Therefore, when the leaf springs 100a and 100b deform in the optical axis direction, the holder 105 moves in the optical axis direction. In the actuator illustrated in FIG. 13, the application of a current to the coil 103 causes electromagnetic induction between the magnet 101 and the coil 103. Thus, the holder 105 moves in the direction of an arrow (optical axis direction).

There has been a growing demand for a more compact and slimmer autofocusing actuator that makes it possible to provide a more compact and slimmer imaging device for use in a mobile electronic apparatus. For example, in order to miniaturize and slim the actuator of FIG. 13, it is mandatory that the volume of the magnetic circuit in the actuator be reduced. When the volume of the magnetic circuit in the actuator is reduced, there is a reduction in efficiency of the electromagnetic induction caused between the permanent magnet 101 and the coil 103 by the magnetic circuit. That is, there is a reduction in thrust per unit current generated by the magnetic circuit.

Such a reduction in thrust per unit current generated by the magnetic circuit causes an increase in power consumption necessary for driving the holder 105. In a battery-powered mobile electronic apparatus, such an increase in power consumption undesirably shortens the operating time. In order to prevent an increase in power consumption and a reduction in thrust generated by the magnetic circuit, it is only necessary, in the case of the actuator of FIG. 13, to lower the spring constant of the pair of leaf springs 100a and 100b supporting the holder 105.

Examples of a method for lowering the spring constant of the leaf springs 100a and 100b include: (i) a method for increasing the length of a part serving as a spring, (ii) a method for reducing the width of a spring, (iii) a method for reducing the thickness of the leaf springs 100a and 100b.

The adoption of (i) the method for increasing the length of a part serving as a spring causes an increase in projection area of the actuator. In other words, the adoption of the method (i) causes an increase in size of the actuator, and therefore contradicts the intended purpose (of miniaturizing and slimming the actuator).

The adoption of (ii) the method for reducing the width of a spring or (iii) the method for reducing the thickness of the leaf springs 100a and 100b causes a reduction in strength of the leaf springs 100a and 100b. Such a reduction in strength of the leaf springs 100a and 100b may cause the holder 105 to be shaken in a direction other than the optical axis direction due to the impact of a mistaken fall of the mobile electronic apparatus containing the imaging device. The shake often causes plastic deformation of the leaf springs 100a and 100b. Such a plastic deformation of the leaf springs 100a and 100b is very likely to cause failure in operation of the actuator.

Furthermore, the holder 105 is supported by the leaf springs 100a and 100b so that the optical axis of the optical system is perpendicular to the center of an image pickup element. Therefore, the plastic deformation of the leaf springs 100a and 100b causes an increase in tilt of the optical system with respect to the imaging device (in displacement of the optical axis of the optical system from the center of the image pickup element). Such an increase in tilt causes deterioration in the quality of an image captured by the imaging device.

In other words, in the case adoption of the method (ii) or (iii), the normal operation of the actuator can not be guaranteed.

### SUMMARY OF THE INVENTION

The present invention has been made in view of the foregoing problems. It is an object of the present invention to provide a compact and slim actuator excellent in impact resistance, a method for manufacturing the same, an imaging device, and a mobile electronic apparatus.

In order to attain the object, an actuator of the present invention includes a holder for holding an optical lens; a support for supporting the holder so that the holder is able to move in an optical axis direction of the optical lens; and rotating members, disposed in spaces between the holder and the support, which are able to rotate in the spaces, respectively, the support supporting the holder via the rotating members.

In the above arrangement, the rotating members are disposed in the spaces between the holder and the support so that the holder can move in the optical axis direction of the optical lens. In other words, the support supports the holder via the rotating members in a direction perpendicular to the optical axis direction. Examples of the shape of each of the rotating members include a spherical shape and a cylindrical shape. When each of the rotating members has a spherical shape, the rotating member rotates in every direction. When each of the rotating members has a cylindrical shape, the rotating members only need to be disposed in the spaces, respectively, so as to rotate on an axis perpendicular to the optical axis. Therefore, when the rotating members rotate, the holder can move in a direction parallel to the optical axis. That is, the above arrangement does not employ a pair of leaf springs as a component for fixing or supporting the holder so that the holder can move in the optical axis direction.

It should be noted here that the conventional actuator employs only a pair of leaf springs as a component for supporting the holder. Therefore, although the holder can move in the optical axis direction by the pair of leaf springs, most of the force applied to the holder in a direction other than the optical axis direction (hereinafter referred to as "other direction") is transmitted to the pair of leaf springs. Since the pair of leaf springs has elasticity, the pair of leaf springs can push back the holder displaced in the other direction (e.g., in a direction perpendicular to the optical axis), but cannot support (limit) the movement of the holder in the other direction.

In the above arrangement, the support supports the holder via the rotating members in a direction perpendicular to the optical axis. Therefore the support can support (limit) the movement of the holder in the other direction. That is, the above arrangement does not require a pair of leaf springs for supporting the movement of the holder in the optical axis direction.

When the magnetic circuit is miniaturized for the purpose of miniaturizing and slimming the conventional voice-coil actuator, the width and thickness of the pair of leaf springs must be reduced (and such a reduction causes a reduction in physical strength). When the mobile electronic apparatus including the imaging device mistakenly falls and collides with the ground, the holder receives force from the other direction. Most of the force applied to the holder is transmitted to the pair of leaf springs. The pair of leaf springs, whose physical strength has been reduced, is vulnerable to plastic deformation. In other words, the conventional actuator cannot restrain the holder from being shaken and displaced in the other direction.

As mentioned above, in the above arrangement, the support supports the movement of the holder in the other direction via the rotating members, and therefore restrains the holder from being shaken and displaced due to the impact of a fall of the apparatus. Unlike the leaf springs, the rotating members are hardly deformed even when miniaturized. With this, unlike the conventional actuator, the present invention does not invite a problem of the reduction in strength of a member for fixedly holding a holder.

This makes it possible to provide a compact and slim actuator excellent in impact resistance.

Further, it is preferable that an imaging device of the present invention include the actuator.

This brings about the same effect as the actuator.

Further, it is preferable that a mobile electronic apparatus of the present invention include the imaging device.

This brings about the same effect as the actuator.

Further, in order to solve the above problems, a method for manufacturing the actuator of the present invention includes the steps of: preparing a holder for holding an optical lens; forming a support for supporting the holder so that the holder is able to move in an optical axis direction of the optical lens; and disposing rotating members in spaces between the holder and the support, respectively, the support supporting the holder via the rotating members capable of rotating in the spaces.

In the above arrangement, the rotating members are disposed in the spaces between the holder and the support so that the holder can move in the optical axis direction of the optical lens. In other words, the support supports the holder via the rotating members in a direction perpendicular to the optical axis direction. Therefore, when the rotating members rotate, the holder can move in a direction parallel to the optical axis.

Furthermore, in the above arrangement, the support supports the holder via the rotating members in a direction perpendicular to the optical axis. Therefore the support can support (limit) the movement of the holder in the other direction.

As described above, in the above arrangement, the support supports the movement of the holder in the other direction, therefore restrains the holder from being shaken and displaced due to the impact of a fall of the apparatus. That is, the leaf spring does not serve as a component for fixing and supporting the holder against the force applied from the other direction.

As described above, the present invention makes it unnecessary to lower the spring constant of a leaf spring in order to make a compact and slim actuator. Therefore, unlike the conventional actuator, the present invention does not invite a problem of "the reduction in strength of a pair of leaf springs for fixedly holding a holder". That is, the present invention does not cause a reduction in impact resistance of the compact and slim actuator.

This brings about the same effect as the actuator.

Additional objects, features, and strengths of the present invention will be made clear by the description below. Further, the advantages of the present invention will be evident from the following explanation in reference to the drawings.

### BRIEF DESCRIPTION OF THE DRAWINGS

FIG. 1 is a three-dimensional view of the appearance of an imaging device according to an embodiment of the present invention.
FIG. 2 is a three-dimensional exploded view of an arrangement of the imaging device of FIG. 1.
FIG. 3 is a cross-sectional view of the arrangement of the imaging device of FIG. 1.
FIG. 4 is a cross-sectional view of the arrangement of the imaging device of FIG. 1, taken from a cross-section different from that of FIG. 3.
FIG. 5 is a plan view showing an arrangement of an actuator according to an embodiment of the present invention as seen from an object side.
FIG. 6 is a plan view showing the arrangement of the actuator according to an embodiment of the present invention as seen from an image plane side.
FIG. 7 is a plan view showing an arrangement of an actuator according to another embodiment of the present invention as seen from the object side.
FIG. 8 is a plan view showing the arrangement of the actuator according to another embodiment of the present invention as seen from the image plane side.
FIG. 9 is a three-dimensional view of an arrangement of a holder according to still another embodiment of the present invention.
FIG. 10 is a cross-sectional view of an arrangement of an imaging device according to still another embodiment of the present invention.
FIG. 11 is a three-dimensional view of a state of operation of a mobile electronic apparatus containing an imaging device according to the present invention.
FIG. 12 is a three-dimensional view of another state of operation of the mobile electronic apparatus containing the imaging device according to the present invention.
FIG. 13 is a cross-sectional view of an arrangement of a conventional actuator.

### DESCRIPTION OF THE EMBODIMENTS

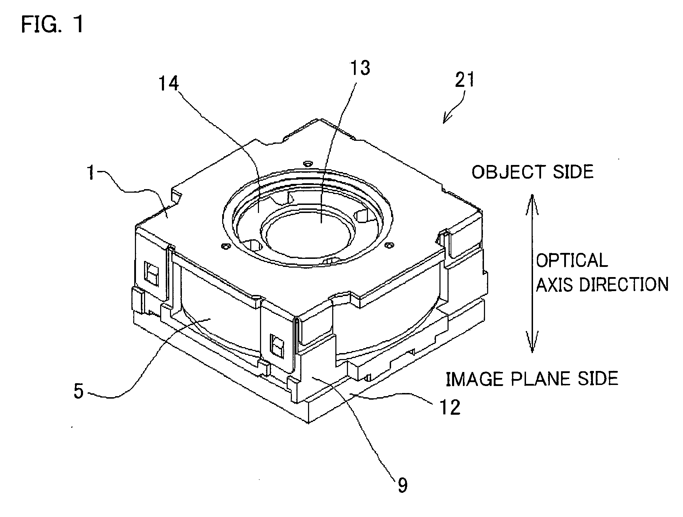

Embodiments according to the present invention will be described with reference to FIGS. 1 to 12. In the following explanation, identical members and components are given identical numbers, identical names, and functions, respectively. As such, those members and components will not be explained repeatedly in detail.

### (Definition of Terms)

The following provides the definition of terms used in the present specification.

In the present specification, the term "optical axis direction" means a direction parallel to the central axis of light coming from a subject to an optical lens (direction parallel to a segment between an optical member and the subject).

Further, in explanation of the structure of each arrangement in the present specification, a surface and a portion near the subject are referred to as a surface and a portion that face an "object side", and a surface and a portion opposite to the object side are referred to as a surface and a portion that face an "image plane side".

### [First Embodiment]

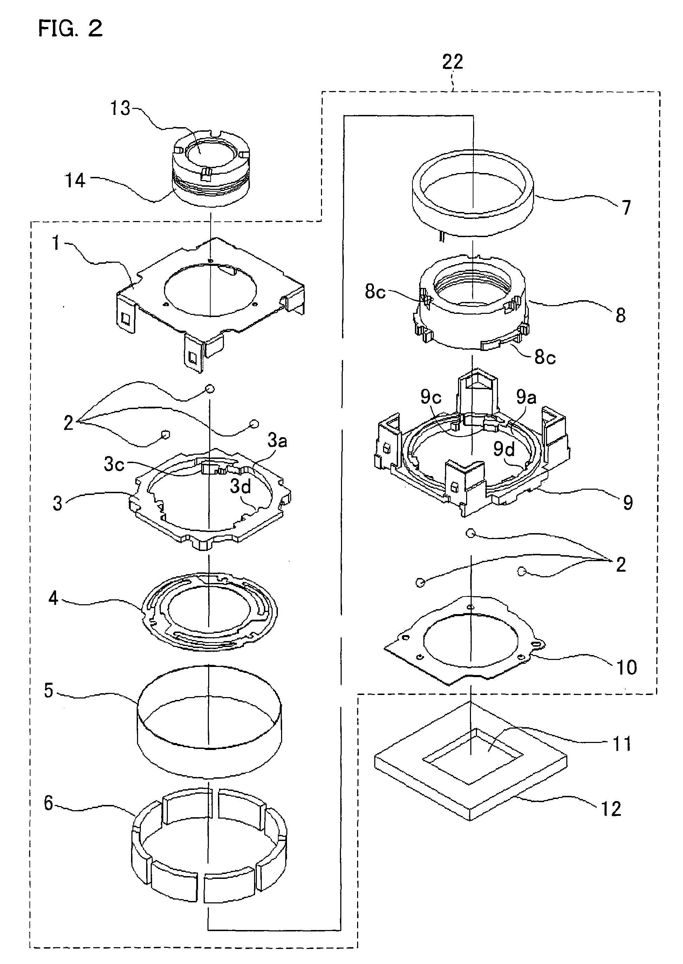

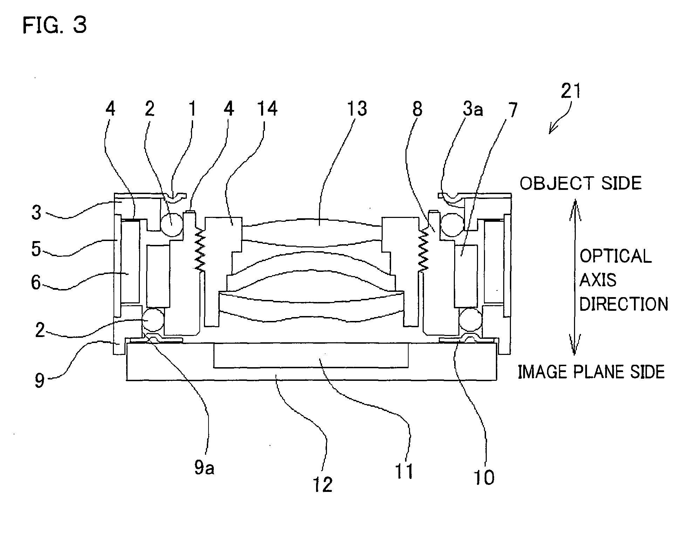

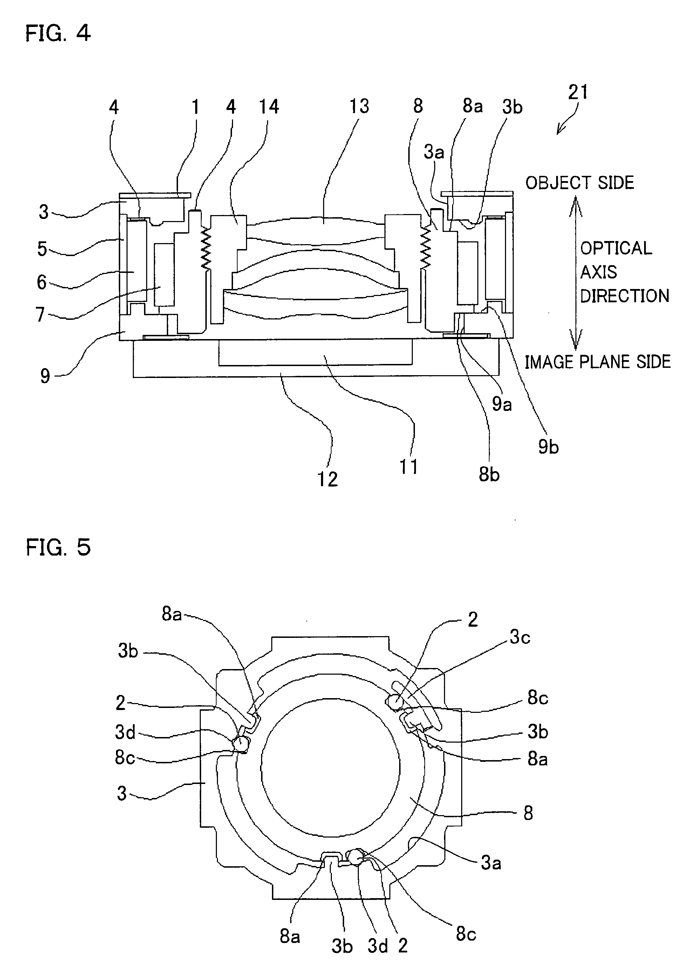

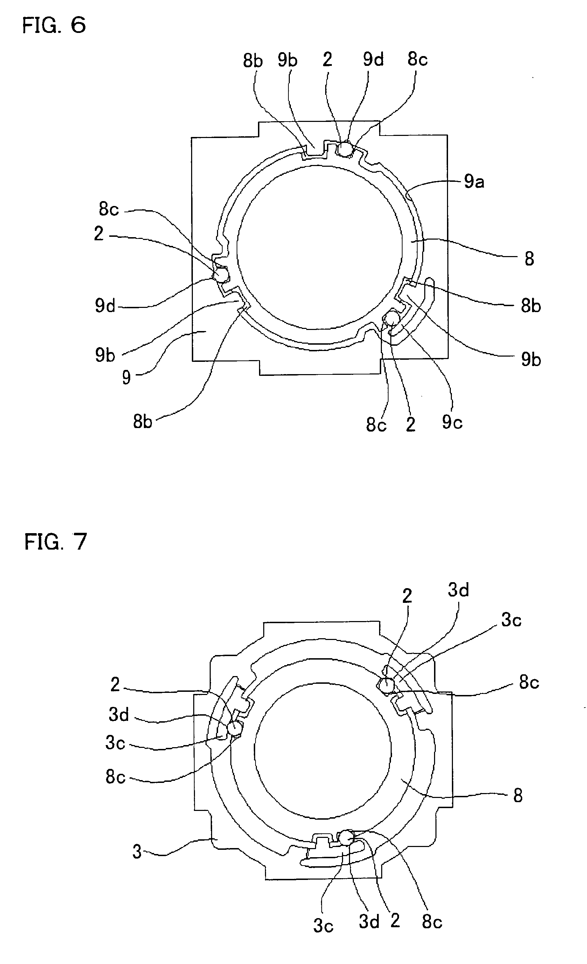

An imaging device 21 according to an embodiment of the present invention will be described below with reference to FIGS. 1 to 6. FIG. 1 is a three-dimensional view of the appearance of the imaging device 21. FIG. 2 is a three-dimensional exploded view of an arrangement of the imaging device 21. FIG. 3 is a cross-sectional view of the arrangement of the imaging device 21. FIG. 4 is a cross-sectional view of the arrangement of the imaging device 21, taken from a cross-section different from that of FIG. 3. FIG. 5 is a plan view showing an arrangement of an actuator 22 as seen from the object side. FIG. 6 is a plan view showing the arrangement of the actuator 22 as seen from the image plane side.

### (Appearance of the Imaging Device 21)

As shown in FIGS. 1 to 3, the imaging device 21 includes, starting from the object side, a cover 1 for covering the top of the imaging device 21, a barrel 14 for holding a lens 13, a yoke 5 (magnetic body) for covering a side surface of the imaging device 21, a base 9 for supporting a part of the image plane side of the barrel 14, and a sensor board 12 including an image pickup element 11 (see FIGS. 2 and 3). When light from a subject enters the lens 13 from the object side of the imaging device 21, the light is turned into an image by the lens 13. When the light thus turned into an image reaches the image pickup element 11, the light thus turned into an image is converted into an electronic signal by the image pickup element 11.

### (Internal Structure of the Imaging Device 21)

As shown in FIG. 2, the actuator 22 includes the top cover 1 for covering the object side, a holder 8 for holding the barrel 14, an upper guide 3 (first support) for supporting the object side of the holder 8 from a side surface of the holder 8, the base 9 (second support) for supporting the image plane side of the holder 8 from the side surface, a plurality of spherical bodies 2 (rotating members) respectively disposed in spaces between the holder 8 and the upper guide 3 and between the holder 8 and the base 9, a leaf spring 4 fixed on that surface of the holder 8 which faces the object side, a coil 7 wound around the side surface of the holder 8, the yoke 5 for covering a side surface of the actuator 22, a magnet 6 bonded onto an inner wall of the yoke 5, and a bottom cover 10 (lid) formed on the image plane side of the base 9. In the actuator 22, the sensor board 12 formed with the image pickup element 11 is fixed onto the image plane side of the base 9 through the bottom cover 10, and the barrel 14 holding the lens 13 is inserted into a space in the holder 8 from the object side. Thus, the imaging device 21 of FIG. 1 is manufactured. It should be noted that when the barrel 14 is inserted into the holder 8, the center of the optical axis of the lens 13 and the center of the image pickup element 11 are aligned with each other so as to correspond substantially to each other.

For example, the actuator 22 is an actuator for performing automatic focus in the imaging device 21 included in a mobile electronic apparatus such as a mobile phone. As described above, the light entering the imaging device 21 is turned into an image, and the light thus turned into an image is converted into an electronic signal by the image pickup element 11. Thus, an image of the subject is formed.

As shown in FIGS. 2 and 3, the yoke 5 takes the shape of a cylinder. The yoke 5 is sandwiched between (i) the top cover 1 and the upper guide 3 on the object side and (ii) the bottom cover 10 and the base 9 on the image plane side. The magnet 6, obtained by dividing a cylindrical magnet into a plurality of plate magnets, is bonded onto the inner wall of the yoke 5. The holder 8 is disposed in a space formed by the yoke 5, the top cover 1, the upper guide 3, the base 9, the magnet 6, and the bottom cover 10. The coil 7 is wound around the side surface of the holder 8. There is a space between the coil 7 and the magnet 6. The holder 8 has holes 8c respectively encasing a plurality of spherical bodies 2. Each of the plurality of spherical bodies 2 is in contact with the holder 8 and the upper guide 3 or the holder 8 and the base 9.

### (Magnetic Circuit)

The actuator 22 includes a magnetic circuit constituted by the magnet 6, the yoke 5 and the coil 7. Therefore, the application of a current to the coil 7 causes electromagnetic induction between the magnet 6 and the coil 7. The electromagnetic induction generates thrust that acts, in the optical axis direction, on the holder 8 around which the coil 7 has been wound. The thrust causes the holder 8 to move along the optical axis direction. It should be noted that the thrust applied to the holder 8 is proportional to the amount of current applied to the coil 7, and the direction of the thrust applied to the holder 8 depends on the direction of the current applied to the coil 7.

### (Upper Guide 3 and the Base 9)

As described above, the top cover 1, the upper guide 3 and the base 9 are provided so as to sandwich the magnet 6 and the yoke 5 therebetween in the optical axis direction. The magnet 6 and the yoke 5 are sandwiched between (i) the top cover 1 and the upper guide 3 on the object side and (ii) the base 9 on the image plane side. Each of the upper guide 3 and the base 9 takes the shape of a ring so as to have a through-hole. Into the through-hole, the holder 8 around which the coil 7 has been wound is inserted. The yoke 5 is disposed on the object side of the base 9, and the sensor board 12 including the image pickup element 11 is disposed on the image plane side of the base 9. The upper guide 3 is disposed on the base 9 and the yoke 5, and is fixedly sandwiched between (i) the base 9 and the yoke 5 and (ii) the top cover 1 when the top cover 1 and the base 9 are fixed.

### (Movement of the Holder 8 in the Optical Axis Direction)

FIG. 4 is a cross-sectional view of a part where no spherical bodies 2 are disposed. As shown in FIG. 4, the actuator 22 has a space, formed by the upper guide 3, the yoke 5, and the base 9, in which the holder 8 is encased. A part of that surface 3b of the upper guide 3 which faces the image plane side and a part of that surface 8a of the holder 8 which faces the object side overlap when seen in the optical axis direction. Therefore, the holder 8 cannot move beyond a place of contact between the part of the surface 8a of the holder 8 and the part of the surface 3b of the upper guide 3. That is, the range of movement of the holder 8 along the optical axis direction to the object side is limited by the upper guide 3.

Furthermore, a part of that surface 9b of the base 9 which faces the object side and a part of that surface 8b of the holder 8 which faces the image plane side overlap when seen in the optical axis direction. Therefore, the holder 8 cannot move beyond a place of contact between the part of the surface 8b of the holder 8 and the part of the surface 9b of the base 9. That is, the movement of the holder 8 along the optical axis direction to the image plane side is limited. In other words, the upper guide 3 and the base 9 have a function of limiting (deciding) the range of movement of the holder 8 in the optical axis direction.

In the present embodiment, the range of movement of the holder 8 in the optical axis direction is limited by bringing a part of the holder 8 into contact with a part of the upper guide 3 and a part of the base 9. However, it is possible to use another arrangement. For example, the range of movement of the holder 8 in the optical axis direction may be limited by bringing, into contact with a part of the upper guide 3 and a part of the base 9, a part of the coil 7 wound around the holder 8.

The actuator 22 has a through-hole formed by a wall surface 3a of an opening of the upper guide 3 and a wall surface 9a of an opening of the base 9. The through-hole guides, in the optical axis direction, the holder 8 holding the lens 13. That is, (wall surfaces 3a and 9a of the openings of) the upper guide 3 and the base 9 serve as a guide section for guiding the holder 8 in the optical axis direction.

### (Spherical Bodies 2)

In the actuator 22, the plurality of spherical bodies 2 are disposed so as to make contact with a part of the side surface of the holder 8, assuming that those surfaces perpendicular to the optical axis direction are a top surface and a bottom surface. Each of the spherical bodies 2 is rotated by force of friction with the side surface of the holder 8. Such force of friction is generated when the holder 8 moves in the optical axis direction. In the actuator 22, the force of friction generated by the rotation of the spherical body 2 supports (stabilizes) the movement of the holder 8 in the optical axis direction. At the same time, because the side surface of the holder 8 makes contact with the spherical body 2, the displacement of the holder 8 in a direction perpendicular to the optical axis direction is limited.

In the actuator 22, the spherical body 2 is in contact with the side surface of the holder 8 in order to support the movement of the holder 8 in the optical axis direction. This makes it unnecessary to fix a holder with use of a pair of leaf springs as is conventionally done. Therefore, unlike the conventional actuator, the actuator 22 does not invite a problem of the "reduction in strength of a pair of leaf springs fixedly holding a holder". For example, the conventional actuator makes it necessary to lower the spring constant of the pair of leaf springs when the volume of the magnetic circuit is reduced for the purpose of miniaturizing and slimming the actuator. When the spring constant of the pair of leaf springs is lowered, the physical strength of the pair of leaf springs supporting the holder is reduced. When the physical strength of the pair of leaf springs is reduced, the pair of leaf springs becomes vulnerable to plastic deformation due to the impact of a fall or the like, so that the optical axis of the optical lens held by the holder is easily deformed. Therefore, when the conventional actuator is made more compact and slimmer, it suffers from a problem of the reduction in impact resistance to a fall of an imaging device for use in a mobile electronic apparatus.

As described above, in the actuator 22, a part of the side surface of the holder 8 is in contact with the plurality of spherical bodies 2 for supporting the holder 8. Furthermore, there is just one leaf spring 4 provided on the object side of the holder 8. Unlike in the conventional actuator, the leaf spring 4 does not serve as a member for fixing or supporting the holder 8. Unlike the leaf spring, the spherical bodies 2 fixing and supporting the holder 8 are not deformed even when the actuator 22 is miniaturized. This makes it possible to realize a compact and slim actuator 22 excellent in impact resistance.

Furthermore, in the conventional actuator, the pair of leaf springs supports only the movement of the holder in the optical axis direction. That is, the conventional actuator does not include a member for restraining (limiting) the displacement of the holder in a direction other than the optical axis direction. On the other hand, in the actuator 22, the spherical bodies 2 restrain (limit) the displacement of the holder 8 in a direction other than the optical axis direction. Therefore, in the actuator 22, the holder 8 is hardly shaken in a direction other than the optical axis direction due to the impact of a fall of the imaging device for use in the mobile electronic apparatus.

In the actuator 22, each of the spherical bodies 2 is disposed so as to make contact with the side surface of the holder 8. Therefore, a movement of the holder 8 in the optical axis direction generates force of friction between the spherical body 2 and the side surface of the holder 8. The generation of the force of friction between the spherical body 2 and the side surface of the holder 8 brings about the above-mentioned effect. That is, the arrangement of the actuator 22 is not limited as long as the spherical body 2 is disposed so as to make contact with the side surface of the holder 8.

The number of spherical bodies 2 to be disposed between the holder 8 and the upper guide 3 or the holder 8 and the base 9 can be set appropriately in accordance with the volume of the magnetic circuit, the amount of current to be applied to the magnetic circuit, and the like. For example, the number of spherical bodies 2 is not limited as long as at least three spherical bodies 2 are disposed on each of the object side and the image plane side of the holder 8. In the case where two spherical bodies 2 are in contact with each of the object side and the image plane side of the holder 8, a movement of the holder 8 in the optical axis direction undesirably destabilizes the position of the holder 8.

Further, when the area of contact between the spherical bodies 2 and the side surface of the holder 8 becomes larger, there is an increase in force of friction to be generated on the side surface of the holder 8. That is, in the actuator 22, the strength that supports the movement of the holder 8 in the optical axis direction is proportional to the magnitude of force of friction (area of contact) between the spherical bodies 2 and the side surface of the holder 8. The area of contact between the spherical bodies 2 and the side surface of the holder 8 can be adjusted by changing the number of the spherical bodies 2 to be disposed. Therefore, by changing the number of the spherical bodies 2 to be disposed, the force of friction between the spherical bodies 2 and the side surface of the holder 8 can be appropriately changed so as to correspond to the volume of the magnetic circuit and the amount of current to be applied to the magnetic circuit.

Further, when seen in the optical axis direction, the actuator 22 is preferably arranged such that the plurality of spherical bodies 2 are disposed so as to sandwich the holder 8 therebetween in a direction perpendicular to the optical axis direction. For example, the plurality of spherical bodies 2 are disposed such that the surface of contact between the plurality of spherical bodies 2 and the side surface of the holder 8 is symmetrical with respect to the central axis of the holder 8, which central axis corresponds substantially to the optical axis of the lens 13. If the plurality of spherical bodies 2 are disposed so as to sandwich the holder 8 therebetween in a direction perpendicular to the optical axis direction, the holder 8 can be supported equally in a direction perpendicular to the optical axis direction. That is, the plurality of spherical bodies 2 can more accurately support the movement of the holder 8 in the optical axis direction.

Each of the spherical bodies 2 is preferably made of non-magnetic material. In the case of the spherical bodies 2 made of non-magnetic material, the disposition of the spherical bodies 2 in a strong magnetic field does not influence the magnetic field, and does not influence the magnetic flux distribution by the magnetic circuit, either. Furthermore, when each of the the spherical bodies 2 is made of non-magnetic material, the movement (rotation) of the spherical body 2 is not influenced by magnetic force generated from the magnetic circuit. Examples of such non-magnetic material include ceramic, brass, glass, and non-magnetic stainless steel.

### (Disposition of the Plurality of Spherical Bodies 2)

The following explains an example of the disposition and number of spherical bodies 2 with reference to FIGS. 3, 5, and 6.

As shown in FIG. 3, each of the spherical bodies 2 is disposed in a space between the upper guide 3 and the holder 8 or in a space between the base 9 and the holder 8. Further, as shown in FIG. 5, there are three spherical bodies 2 disposed between the upper guide 3 and the holder 8 so as to sandwich the holder 8 therebetween. Further, as shown in FIG. 6, there are three spherical bodies 2 disposed between the base 9 and the holder 8 so as to sandwich the holder 8 therebetween. That is, there are six spherical bodies 2 sandwiching those portions of the holder 8 which face the object side and the image plane side. When a segment is drawn between each of the three spherical bodies 2 sandwiching that portion of the holder 8 which faces the object side and the central axis of the holder 8, the three segments are at an angle of 120 degrees to one another. In other words, an equilateral triangle can be drawn when the respective positions of the three spherical bodies 2 are connected by straight lines.

Furthermore, the side surface of the holder 8 is formed with a plurality of depressions 8c each having a cylindrical shape parallel to the optical axis direction. The three spherical bodies 2 disposed between the upper guide 3 and the holder 8 are encased in three spaces surrounded by three depressions 8c and the wall surface 3a of the opening of the upper guide 3, respectively. Similarly, the three spherical bodies 2 disposed between the base 9 and the holder 8 are encased in three spaces surrounded by three depressions 8c and the wall surface 9a of the opening of the base 9, respectively.

There is provided a lever 3c on one of those three parts of the wall surface 3a of the upper guide 3 which respectively face the three depressions 8c of the holder 8. Similarly, there is provided a lever 9c on one of those three parts of the wall surface 9a of the base 9 which respectively face the three depressions 8c of the holder 8. The levers 3c and 9c have elasticity in a direction perpendicular to the optical axis. Thus, each of the levers 3c and 9c biases, via one spherical body 2 in contact with the lever 3c or 9c, the holder 8 toward the two other spherical bodies 2. With this, when the holder 8 moves in the optical axis direction, the spherical bodies 2 rotate in the spaces, and support the holder 8 by force of friction with the depressions 8c.

As described above, the side surface of the holder 8 is formed with the depressions 8c, and the upper guide 3 and the base 9 are formed with the levers 3c and 9c, respectively. This makes it certain that the spherical bodies 2 make contact with the side surface of the holder 8 (the spherical bodies 2 are not out of contact with the side surface of the holder 8) when the holder 8 moves in the optical axis direction.

Those parts of the wall surface 3a of the upper guide 3 which face the depressions 8c of the holder 8 but are not formed with the lever 3c are formed with minute concavities 3d. Similarly, those parts of the wall surfaces 9a of the base 9 which face the depressions 8c of the holder 8 but are not formed with the lever 9c are formed with minute concavities 9d. The minute concavities 3d and 9d have grooves parallel to the optical axis; therefore, the spherical bodies 2 rotate along the concavities 3d and 9d. That is, the movement of the spherical bodies 2 in a direction perpendicular to the grooves of the concavities 3d and 9d is limited. In other words, the concavities 3d and 9d restrain the holder 8 from rotating on the optical axis. This makes it possible to prevent the holder 8 from making contact with the upper guide 3 and the base 9.

The three spherical bodies 2 disposed between the holder 8 and the upper guide 3 and the three spherical bodies 2 disposed between the holder 8 and the base 9 are disposed so as to overlap (to be identical in phase) when seen in the optical axis direction, respectively. Similarly, the levers 9c and 3c are disposed so as to overlap (to be identical in phase) when seen in the optical axis direction. This stabilizes the direction of bias (load) applied to the holder 8 by the levers 3c and 9c. Thus, the holder 8 moves more stably in the optical axis direction.

In the actuator 22, the holder 8 is supported via the spherical bodies 2. Therefore the side surface of the holder 8 does not make contact with the upper guide 3 or the base 9 (the wall surface 3a and the wall surface 9a). In the case where the side surface of the holder 8 is in contact with the upper guide 3 and the base 9, a movement of the holder 8 in the optical axis direction causes unnecessary force of friction between the side surface of the holder 8 and the upper guide 3 and between the side surface of the holder 8 and the base 9. This prevents the holder 8 from smoothly moving in the optical axis direction. In this respect, the spherical bodies 2 serve as a guide for smoothly moving the holder 8 in the optical axis direction inside the through-holes formed by the wall surface 3a of the upper guide 3 and the wall surface 9a of the base 9.

### (Top Cover 1 and the Bottom Cover 10)

The actuator 22 has the top cover 1 provided at the top of the upper guide 3. The top cover 1 prevents the spherical bodies 2 from coming out of the actuator in which the sensor board 12 has not been fixed yet, and prevents dust from entering the actuator 22. Further, the bottom cover 10 formed at the bottom of the base 9 prevents the spherical bodies 2 from coming out of the actuator, and prevents dust from adhering onto the image pickup element 11 to which the sensor board 12 has already been fixed.

Furthermore, each of the top cover 1 and the bottom cover 10 is made of magnetic material. Thus, the top cover 1 and the bottom cover 10 are attracted by the magnetic force of the magnet 6. This makes it unnecessary to perform such an operation as adhesion in order to fix the top cover 1 and the bottom cover 10 in assembling the actuator 22. Because each of the top cover 1 and the bottom cover 10 is made of magnetic material, it is possible to simplify the assembly.

### (Leaf Spring 4)

In the actuator 22, the leaf spring 4 is disposed on the object side of the holder 8. The leaf spring 4 is supported and fixed by the upper guide 3. The leaf spring 4 is in contact with the object-side surface of the holder 8 which moves in the optical axis direction. The leaf spring 4 applies advance pressure to the holder 8, the advance pressure being proportional to the amount of movement (shift) of the holder 8 in the optical axis direction. That is, elastic force proportional to the amount of movement of the holder 8 in the optical axis direction is generated in the leaf spring 4. In the actuator 22, when the thrust generated in the holder 8 by the electromagnetic induction and the elastic force generated in the leaf spring 4 balance out, the position of the holder 8 is retained. Therefore, the position of the holder 8 is proportionally related to the amount of current applied to the coil 7. The same applies to the conventional actuator.

The actuator 22 includes the spherical bodies 2, thereby making it unnecessary to perform unconventional, special position control (e.g., installation of a position sensor). That is, the actuator 22 can control the position of a holder in the same manner as the conventional actuator. This makes it possible to achieve reductions in cost and size of an imaging device.

In the actuator 22 according to the present embodiment, the holder 8 is supported via the spherical bodies 2. This makes it unnecessary to fix and support the holder 8 with use of a pair of leaf springs as is conventionally done. That is, the leaf spring 4 does not need to be fixed to the holder 8 which moves in the optical axis direction.

For example, there may be fluctuations in zone of contact between the holder 8 and the leaf spring 4 as the holder 8 moves along the optical axis direction toward the object side. In other words, there may be a skid of the zone of contact between the leaf spring 4 and the holder 8 moving in the optical axis direction. In this case, the plastic deformation of the leaf spring 4 due to a shake of the holder 8 at the time of a fall of the imaging device for use in the mobile electronic apparatus can be better restrained, in comparison with the arrangement in which the holder 8 is fixed to the leaf spring 4.

In the present embodiment, the spherical bodies 2 are used to support the holder 8 moving in the optical axis direction. However, the leaf spring 4 may be further used to support the holder 8. That is, the holder 8 may be fixed and supported by the leaf spring 4. The conventional actuator requires two leaf springs for fixing and supporting the holder 8. On the other hand, in the actuator 22 according to the present invention, the spherical bodies 2 are used to support the movement of the holder 8 in the optical axis direction; therefore, the actuator 22 requires only one leaf spring for fixing and supporting the holder 8. Therefore, even if the leaf spring 4 is formed so as to have the same spring constant as the conventional leaf springs, the strength of the leaf spring 4 is greater than that of each of the leaf springs of the conventional actuator. Therefore, the durability of the leaf spring 4 at the time of a fall of the imaging device for use in the mobile electronic apparatus can be increased.

### [Second Embodiment]

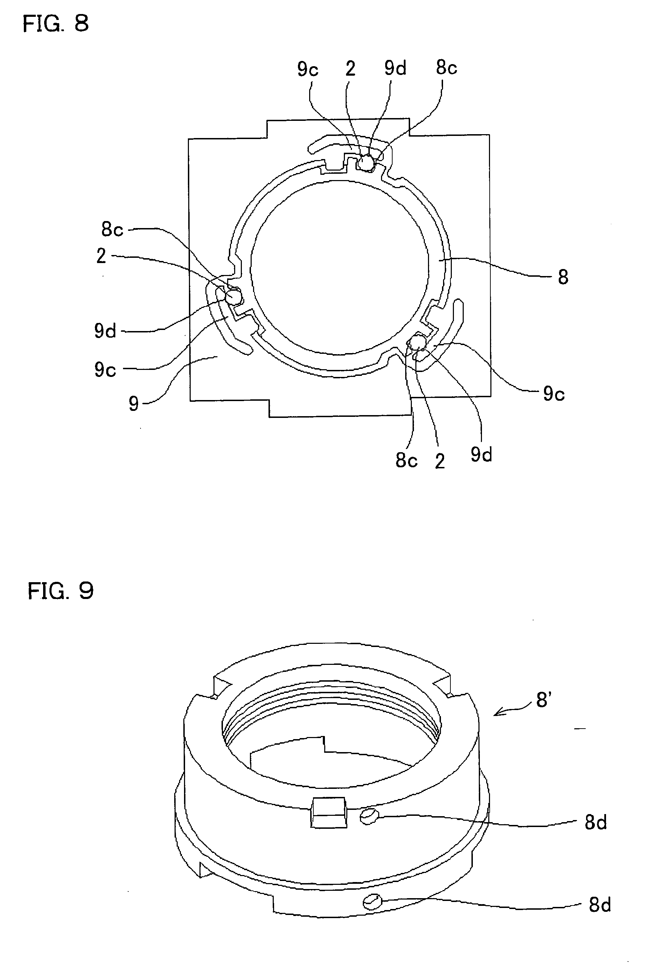

An actuator according to another embodiment will be described below with reference to FIG. 7 and FIG. 8. FIG. 7 is a plan view showing an arrangement of the actuator as seen from the object side. FIG. 8 is a plan view showing the arrangement of the actuator as seen from the image plane side. Members having the same names and functions as those explained in the First Embodiment are given the same numbers. See the First Embodiment for details of these members.

The actuator of the present embodiment differs from the actuator 22 of the First Embodiment in the number of levers 3c and 9c formed, respectively, on the upper guide 3 and the base 9. Therefore, the following explains only the levers 3c and 9c formed, respectively, on the upper guide 3 and the base 9.

As shown in FIG. 7, there are three levers 3c formed on the wall surface 3a of the upper guide 3 so as to face three depressions 8c of the side surface of the holder 8, respectively. Furthermore, there are minute concavities 3d formed in places of contact between three levers 3c and three spherical bodies 2, respectively.

As shown in FIG. 8, there are three levers 9c formed on the wall surface 9a of the base 9 so as to face three depressions 8c of the side surface of the holder 8, respectively. Furthermore, there are minute concavities 9d formed in places of contact between three levers 9c and three spherical bodies 2, respectively.

As described above, each of the object side and the image plane side of the holder 8 are biased from three directions to a direction perpendicular to the optical axis. This makes it possible to more stably move the holder 8 in the optical axis direction, and to surely retain the position of the optical axis. Further, the six spherical bodies 2 move along the concavities 3d, respectively. This makes it possible to more surely prevent the spherical bodies 2 from rotating on the optical axis of the holder 8.

### [Third Embodiment]

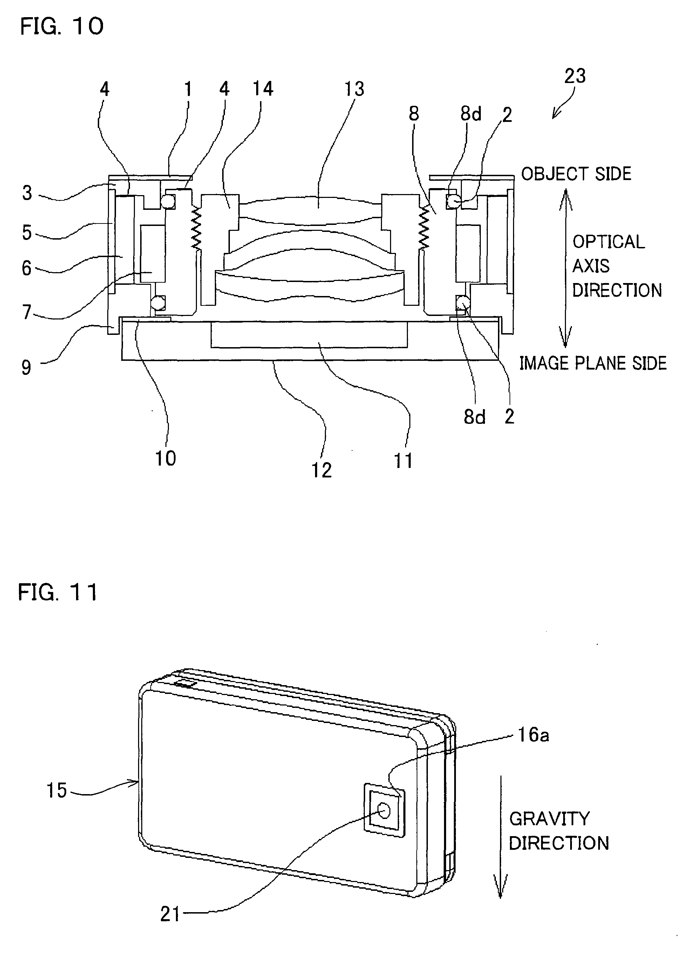

Still another embodiment will be described below with reference to FIGS. 9 and 10. FIG. 9 is a three-dimensional view of an arrangement of a holder 8' according to the present embodiment. FIG. 10 is a cross-sectional view of an arrangement of an imaging device 23. Members having the same name and function as those explained in the First Embodiment are given the same numbers. See the First Embodiment for details of these members.

The holder 8' of the present embodiment differs from the holder 8 of the First Embodiment in the shape of depressions formed thereon. Therefore, the following explains the shape of depressions formed on the holder 8'.

As shown in FIG. 9, there are three depressions 8d formed on that side surface of the holder 8 which is close to the object side, and there are three depression 8d formed on that side surface of the holder 8 which is close to the image plane side. Each of the depressions 8d is a hole, having a substantially circular opening that extends in a direction perpendicular to the optical axis, which has the same diameter from the opening to the bottom.

As shown in FIG. 10, the opening of the depression 8 has substantially the same diameter as does a spherical body 2. Each of the six depressions 8d encases one spherical body 2. The spherical body 2 encased in the depression 8d makes contact with the upper guide 3 or the base 9.

With this arrangement, the opening of the depression 8d is sealed by the upper guide 3 or the base 9, which faces the depression 8d. Therefore, the spherical body 2 encased in the depression 8d does not come out of the depression 8d even in response to the impact of a fall or the like. That is, this makes it possible to increase the durability of an actuator incorporated into a product.

In the present embodiment, a depression having a circular opening that extends in a direction perpendicular to the optical axis is formed on the side surface of the holder 8. However, a depression having the above-mentioned shape may be formed on the upper guide 3 and the base 9.

### [Forth Embodiment]

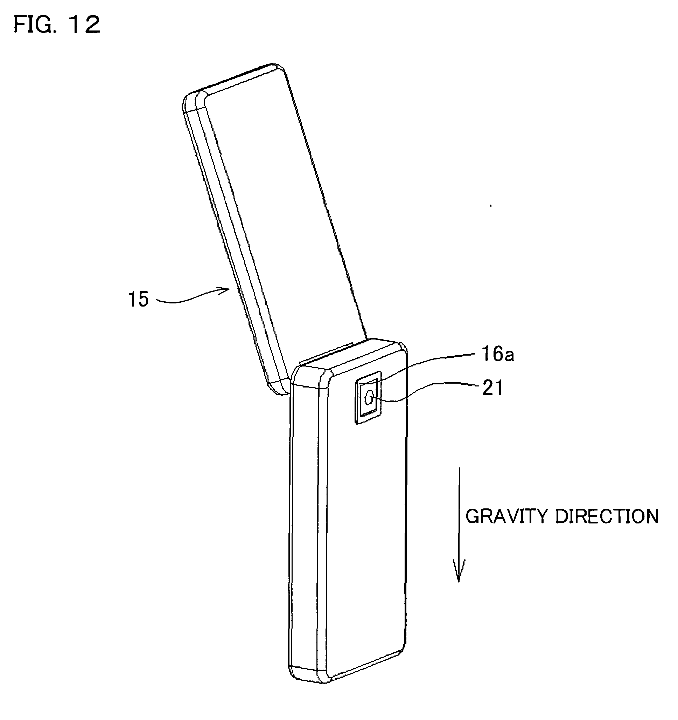

A mobile phone 15 including the imaging device 21 of the First Embodiment will be described below with reference to FIGS. 11 and 12. FIG. 11 is a three-dimensional view of the oblong mobile phone 15 positioned so that its longer sides are horizontal. FIG. 12 is a three-dimensional view of the oblong mobile phone 15 positioned so that its longer sides are parallel to a gravity direction.

In FIG. 11, the mobile phone 15 adopts such a shooting posture as to be positioned so that its longer sides are horizontal.

In FIG. 12, the mobile phone 15 adopts such a shooting posture as to be positioned so that its longer sides are parallel to the gravity direction.

The mobile phone 15 illustrated in FIG. 11 and the mobile phone 15 illustrated in FIG. 12 are different in angle by 90 degrees. In other words, the gravity direction of an imaging device 16 included in the mobile phone 15 rotates 90 degrees. In this case, the actuator 22 is disposed so that the levers 3c and 9c of the actuator 22 are positioned on that upper side 16a of the imaging device 16 which is higher than the optical axis (on a side opposite to the gravity direction). This makes it possible to minimize the influence of gravity on the holder 8 holding the lens 13 and the barrel 14, thereby making it possible to reduce displacement of the holder 8. It should be noted that the levers 3c and 9c are disposed so as to overlap in a direction parallel to the optical axis (see FIGS. 5 and 6).

The present invention is not limited to the description of the embodiments above, but may be altered by a skilled person within the scope of the claims. An embodiment based on a proper combination of technical means disclosed in different embodiments is encompassed in the technical scope of the present invention.

### (Other Arrangement)

It should be noted that the present invention can also be realized according to the following arrangements.

### (First Arrangement)

An actuator including: an optical lens; a holder member for holding the optical lens; a support for supporting the holder member so that the holder member can move in an optical axis direction, the actuator having sphere-holding spaces formed by the holder member and the support, each of the sphere-holding spaces including a spherical body, the holder member moving in the optical axis direction via the spherical body with respect to the support.

### (Second Arrangement)

The actuator according to the first arrangement, wherein the support includes: a base member for supporting one end of the holder member in the optical axis direction so that the holder member can move in the optical axis direction; and a guide member for supporting the other end of the holder member in the optical axis direction so that the holder member can move in the optical axis direction.

### (Third Arrangement)

The actuator according to the first or second arrangement, wherein three such spherical bodies are disposed in three different places, the spherical bodies being separated so as to sandwich the holder when viewed in the optical axis direction.

### (Forth Arrangement)

The actuator according to any one of the first to third arrangements, wherein each of the sphere-holding spaces includes a groove arranged in parallel with the optical axis.

### (Fifth Arrangement)

The actuator according to any one of the first to fourth arrangements, wherein each of the sphere-holding spaces is a hole having a central axis perpendicular to the optical axis.

### (Sixth Arrangement)

The actuator according to any one of the first to fifth arrangements, wherein the support has surfaces, constituting the sphere-holding spaces, at least one of which has a concavity.

### (Seventh Arrangement)

The actuator according to the third to sixth arrangements, wherein the support has three surfaces, constituting the sphere-holding spaces, at least one of which has elasticity in a direction perpendicular to the optical axis.

### (Eighth Arrangement)

The actuator according to seventh arrangement, wherein that portion of the base member which has elasticity and that portion of the guide member which has elasticity are identical in phase when viewed in the optical axis direction.

### (Ninth Arrangement)

The actuator according to any one of the first to eighth arrangements, further including lids at the top and bottom of the support.

### (Tenth Arrangement)

The actuator according to the ninth arrangement, wherein each of the lids is made of magnetic material.

### (Eleventh Arrangement)

The actuator according to the first to tenth arrangements, wherein each of the spherical bodies is made of non-magnetic material.

### (Twelfth Arrangement)

An imaging device including an actuator according to any one of the first to eleventh arrangements.

### (Thirteenth Arrangement)

A mobile electronic apparatus including an imaging device according to the twelfth arrangement.

### (Fourteenth Arrangement)

The mobile electronic apparatus according to the seventh or eighth arrangement, wherein that elastic portion of the support which is in contact with a spherical body of the actuator is positioned upward when the mobile electronic apparatus adopts a main shooting posture.

As described above, in the actuator of the present invention, the rotating members are disposed in spaces between the holder holding the optical lens and the support, and the holder is supported by the support via the rotating members so as to be able to move in a direction parallel to the optical axis direction. This makes it possible to provide a compact and slim actuator excellent in impact resistance.

Further, in the present actuator, each of the rotating members has a substantially spherical shape.

As described above, if the rotating members are spherical, the rotating members can rotate in every direction in the spaces between the holder and the support.

This allows the holder to smoothly move in the optical axis direction.

Further, in the actuator of the present invention, the support is preferably constituted by a first support for supporting a first end of the holder in the optical axis direction and a second support for supporting a second end of the holder in the optical axis direction.

The above arrangement makes it unnecessary to integrally form the support. That is, the support can be formed by combining the first and second supports each having a simpler shape. This makes it only necessary to form members in simpler shapes, thereby enabling improvements in accuracy of formation of parts.

Further, the simplicity of formation of the first and second supports makes it possible to form a larger space inside the support obtained by combining the first and second supports. This makes it possible to reduce limitations on the shape of the holder disposed in the support.

Further, in the actuator of the present invention, it is preferable that the plurality of spaces are disposed so as to sandwich the holder therebetween in a direction perpendicular to the optical axis direction; the plurality of spaces include spaces provided between the first end of the holder in the optical axis direction and the first support; and the plurality of spaces include spaces provided between the second end of the holder in the optical axis direction and the second support.

In the above arrangement, the plurality of spaces are disposed so as to sandwich the holder therebetween in a direction perpendicular to the optical axis. That is, the plurality of rotating members support the holder so as to sandwich the holder therebetween in a direction perpendicular to the optical axis. The statement that "the plurality of rotating members support the holder so as to sandwich the holder therebetween in a direction perpendicular to the optical axis" can be expressed in other words. For example, the statement can be expressed as follows: The plurality of rotating members are disposed symmetrically with respect to the optical axis. Further, for example, the statement can be also expressed as follows: The plurality of rotating members are disposed so as to form the angles of a polygon, respectively, whose center of gravity is at one point on the optical axis. In this case, the plurality of rotating members support the holder with equal force at various angles.

Furthermore, the holder can be supported at both the first and second ends of the holder in the optical axis direction. That is, the holder is supported with equal force between positions parallel to the optical axis.

This makes it possible to more surely restrain the holder from being displaced or shaken in the other direction. That is, the holder can be supported so as to move more accurately in the optical axis direction.

Further, in the actuator of the present invention, it is preferable that the plurality of spaces include three spaces provided between the first end of the holder in the optical axis direction and the first support; and the plurality of spaces include three spaces provided between the second end of the holder in the optical axis direction and the second support.

In the above arrangement, there are three spaces disposed on the first end of the holder in the optical axis direction so as to sandwich the holder therebetween in a direction perpendicular to the optical axis. That is, there are three rotating members supporting the holder so as to sandwich the holder therebetween in a direction perpendicular to the optical axis direction. For example, the three rotating members are disposed so as to form the angles of an equilateral triangle, respectively. In this case, the plurality of rotating members support the holder with equal force at various angles.

Furthermore, the three rotating members can support the holder so as to sandwich the holder therebetween in a direction perpendicular to the optical axis. Therefore, the plurality of rotating members support the holder with equal force at various angles. Further, the holder can be supported at both the first and second ends of the holder in the optical axis direction. That is, the holder is supported with equal force between positions parallel to the optical axis.

Such an effect can be realized without disposing a large number of spaces and a large number of rotating members. This makes it possible to simplify the manufacturing process.

Further, in the actuator of the present invention, each of the spaces preferably has a cylindrical shape having a central axis parallel to the optical axis direction.

When a rotating member is inserted into a space, provided between the holder and the support, in which the optical axis direction is substantially equal to the gravity direction, the rotating member is disposed in the space by gravity. This makes it easy to insert the rotating member into the space. That is, this makes it possible to simplify the process for manufacturing an actuator.

Further, in the actuator of the present invention, it is preferable that each of the spaces is provided in a hole, formed on the holder or the support, which has an opening that extends in a direction perpendicular to the optical axis direction.

In the above arrangement, the opening of the hole having the opening that extends in a direction perpendicular to the optical axis is sealed by the holder or the supporting body, which faces the opening. The rotating member disposed in the space does not come out of the space even in response to the impact of a fall or the like. That is, this makes it possible to increase the durability of an actuator incorporated into a product.

Further, in the actuator of the present invention, it is preferable that each of the rotating members respectively disposed in the spaces is in contact with a groove formed on the holder or the support in parallel to the optical axis direction.

In the above arrangement, the groove serves as a guide for defining the direction in which the rotating member rolls. For example, if the rotating member is spherical, the rotating member rotates along the groove. Further, for example, if the rotating member has a series of projections that extends in a direction perpendicular to the axis of rotation, the series of projections fits in the groove, so that the rotating member rotates along the groove. This makes it possible to restrain the holder from rotating on the optical axis, thereby making it possible to prevent the support and the holder from making contact with each other.

Further, in the actuator of the present invention, it is preferable that at least one of the spaces has a repulsive section, provided therein, which has elasticity with respect to force applied in a direction perpendicular to the optical axis direction.

According to the above arrangement, the holder is biased, via the rotating members, in a direction perpendicular to the optical axis. This makes it possible to stabilize the movement of the holder in the optical axis direction. Furthermore, this makes it easy to align the optical axis of the holder and the center of an image pickup element with each other.

Further, in the actuator of the present invention, it is preferable that at least one of the three spaces provided between the first end of the holder in the optical axis direction and the first support has a first repulsive section formed therein having elasticity with respect to force applied in a direction perpendicular to the optical axis direction; at least one of the three spaces provided between the second end of the holder in the optical axis direction and the second support has a first repulsive section formed therein having elasticity with respect to force applied in a direction perpendicular to the optical axis direction; and the first and second repulsive sections face each other in a direction parallel to the optical axis direction.

According to the above arrangement, the holder is biased in identical directions at the first and second ends of the holder in the optical axis direction. This makes it possible to stabilize the movement of the holder in the optical axis direction. Furthermore, this makes it easy to align the optical axis of the holder and the center of an image pickup element with each other.

The support is preferably sandwiched between lids in a direction parallel to the optical axis direction.

The above arrangement makes it possible to prevent the rotating members from coming out of the actuator. Further, the above arrangement makes it possible to prevent dust from entering the actuator, and therefore makes it possible, in the case where the actuator is built in an imaging device, to prevent dust from adhering onto an image pickup element.

Further, in the actuator of the present invention, each of the lids is preferably made of magnetic material.

According to the above arrangement, in process of manufacture of a voice-coil actuator, the lids are attracted by the magnetic force of a magnet. This makes it unnecessary to fix the lids by adhesion or the like. This makes it possible to simplify the process for manufacturing an actuator.

Further, in the actuator of the present invention, each of the rotating members is preferably made of non-magnetic material.

According to the above arrangement, in the voice-coil actuator, the rotating members are not attracted by the magnetic force of a magnet. This makes it easy to insert the rotating members into the spaces between the holder and the support. Furthermore, the rotation of the rotating members is not hindered by the magnetic force of a magnet. Therefore, the holder is not prevented from moving in the optical axis direction.

Further, a mobile electronic apparatus of the present invention is a mobile electronic apparatus including an imaging device which includes the actuator, the actuator preferably being disposed so that the repulsive section is positioned on a side opposite to a gravity direction with respect to a horizontal plane including a center of gravity of the support at a time of shooting of a subject.

According to the above arrangement, the repulsive section is not influenced by gravity that pulls the holder and the optical lens. In other words, the repulsive section becomes lower in flexure. This makes it possible to minimize the misalignment of the optical axis of the optical lens supported by the holder and the center of an image pickup element.

The present invention makes it possible to provide a compact and slim actuator excellent in impact resistance, and therefore can be applied to every optical apparatus for forming an image in accordance with light from a subject. Especially, the present invention can be effectively applied to a camera module for use in a mobile phone or the like.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. An actuator comprising:
a holder for holding an optical lens;
a support for supporting the holder so that the holder is able to move in an optical axis direction of the optical lens; and
rotating members, disposed in spaces between the holder and the support, which are able to rotate in the spaces, respectively,
the support supporting the holder via the rotating members.

2. The actuator as set forth in claim 1, wherein each of the rotating members has a substantially spherical shape.

3. The actuator as set forth in claim 1, wherein the support is constituted by a first support for supporting a first end of the holder in the optical axis direction and a second support for supporting a second end of the holder in the optical axis direction.

4. The actuator as set forth in claim 3, wherein:
the plurality of spaces are disposed so as to sandwich the holder therebetween in a direction perpendicular to the optical axis direction;
the plurality of spaces include spaces provided between the first end of the holder in the optical axis direction and the first support; and
the plurality of spaces include spaces provided between the second end of the holder in the optical axis direction and the second support.

5. The actuator as set forth in claim 4, wherein:
the plurality of spaces include three spaces provided between the first end of the holder in the optical axis direction and the first support; and
the plurality of spaces include three spaces provided between the second end of the holder in the optical axis direction and the second support.

6. The actuator as set forth in claim 1, wherein each of the spaces has a cylindrical shape having a central axis parallel to the optical axis direction.

7. The actuator as set forth in claim 1, wherein each of the spaces is provided in a hole, formed on the holder or the support, which has an opening that extends in a direction perpendicular to the optical axis direction.

8. The actuator as set forth in claim 1, wherein each of the rotating members respectively disposed in the spaces is in contact with a groove formed on the holder or the support in parallel to the optical axis direction.

9. The actuator as set forth in claim 3, wherein at least one of the spaces has a repulsive section, provided therein, which has elasticity with respect to force applied in a direction perpendicular to the optical axis direction.

10. The actuator as set forth in claim 5, wherein:
at least one of the three spaces provided between the first end of the holder in the optical axis direction and the first support has a rotating member disposed therein so as to be in contact with a first repulsive section having elasticity with respect to force applied in a direction perpendicular to the optical axis direction;
at least one of the three spaces provided between the second end of the holder in the optical axis direction and the second support has a rotating member disposed therein so as to be in contact with a second repulsive section having elasticity with respect to force applied in a direction perpendicular to the optical axis direction; and
the first and second repulsive sections face each other in a direction parallel to the optical axis direction.

11. The actuator according to claim 1, wherein the support is sandwiched between lids in a direction parallel to the optical axis direction.

12. The actuator according to claim 1, wherein each of the lids is made of magnetic material.

13. The actuator according to claim 1, wherein each of the rotating members is made of non-magnetic material.

14. An imaging device comprising an actuator as set forth in claim 1.

15. A mobile electronic apparatus comprising an imaging device as set forth claim 14.

16. A mobile electronic apparatus comprising an imaging device which includes an actuator as set forth in claim 9,
the actuator being disposed so that the repulsive section is positioned on a side opposite to a gravity direction with respect to a horizontal plane including a center of gravity of the support at a time of shooting of a subject.

17. A method for manufacturing an actuator, comprising the steps of:
preparing a holder for holding an optical lens;
forming a support for supporting the holder so that the holder is able to move in an optical axis direction of the optical lens; and
disposing rotating members in spaces between the holder and the support, respectively,
the support supporting the holder via the rotating members capable of rotating in the space.
